# FASCICULE DE BREVET EUROPEEN

(11) **EP 1 461 562 B1**
(45) Date de publication et mention de la délivrance du brevet: **06.05.2009**
(21) Numéro de dépôt: 02801176.5
(22) Date de dépôt: 24.12.2002
(51) Int. Cl.: F16L 15/06

(54) **PROCEDE DE REALISATION D UN JOINT TUBULAIRE ETANCHE AVEC EXP ANSION PLASTIQUE**
VERFAHREN ZUR HERSTELLUNG EINER ABGEDICHTETEN ROHRFÖRMIGEN VERBINDUNG MIT PLASTISCHER AUSDEHNUNG
METHOD FOR MAKING A SEALED TUBULAR JOINT WITH PLASTIC EXPANSION

(30) Priorité: 03.01.2002 FR 0200055; 27.03.2002 FR 0203842
(43) Date de publication de la demande: 29.09.2004
(73) Titulaire: VALLOUREC MANNESMANN OIL & GAS FRANCE, 59620 Aulnoye-Aymeries (FR)
(72) Inventeur: VERGE, Eric, F-59144 Gommegnies (FR); BRUNEAU, Albert, F-92100 Boulogne Billancourt (FR); DURAND, Antoine, F-59300 Valenciennes (FR)
(74) Mandataire: Rousset, Jean-Claude
(86) Numéro de dépôt international: PCT/FR2002/004546
(87) Numéro de publication internationale: WO 2003/060370

(56) Documents cités:
- WO-A-99/08034
- FR-A- 2 811 056

## Description

L'invention concerne les joints tubulaires, notamment du genre utilisé pour des puits d'hydrocarbures ou pour des puits similaires, par exemple en géothermie.

Un tel joint peut exister entre deux tubes de grande longueur, ou entre un tube de grande longueur et un manchon. Ces joints sont utilisés notamment pour assembler des colonnes de tubes de cuvelage ("casings") ou de production ("tubings"). Compte tenu des caractéristiques mécaniques exigées, les tubes de cuvelage et ceux de production sont généralement en acier traité thermiquement.

De leur côté, les joints doivent tenir en traction, en compression, en flexion et parfois en torsion, ainsi qu'à de forts écarts de pression dans les deux sens entre l'intérieur et l'extérieur. Et ils doivent même être étanches aux gaz, au moins dans certains cas. Les joints filetés sont particulièrement avantageux à cet égard.

Mais il est actuellement envisagé de soumettre les tubes, in situ, à une expansion diamétrale, avec déformation plastique permanente. Ceci offre différents avantages, sur lesquels on reviendra. Encore faut-il que les joints restent opérationnels, après la déformation plastique d'expansion diamétrale, qu'ils subissent comme les tubes. Ainsi, il est souhaitable que les joints filetés tiennent après expansion diamétrale plastique, en conservant l'essentiel des propriétés qui les font apprécier, notamment de tenue mécanique en traction/compression, avec ou sans surpression interne ou externe, ainsi que d'étanchéité.

Comme on le verra plus loin en détail, les joints classiques ne donnent pas entière satisfaction: ou bien ils ne tiennent pas ces exigences, ou bien ils les tiennent de manière aléatoire, ou bien ils les tiennent, mais non de manière répétée.

WO 02/01102 propose une structure de joint prévue pour tenir l'expansion diamétrale plastique.

La présente invention vient améliorer la situation.

L'invention concerne un procédé de réalisation d'un joint tubulaire étanche de hautes performances, dans lequel on part d'un joint tubulaire initial comprenant
- un premier élément tubulaire mâle, comportant un premier filetage mâle et une lèvre annulaire ayant une première surface de butée axiale en extrémité libre du premier élément, et
- un second élément tubulaire femelle, comportant un second filetage femelle, homologue du premier filetage, et un logement, homologue de la lèvre mâle, ayant une seconde surface de butée axiale,
le premier filetage étant vissé dans le second filetage pour amener les deux surfaces de butée en contact mutuel,
et on fait subir au joint tubulaire initial une expansion diamétrale dans le domaine des déformations plastiques à l'aide d'un boulet d'expansion de diamètre supérieur au diamètre intérieur desdits éléments tubulaires qui est déplacé axialement dans le joint.

Selon une caractéristique principale de l'invention, lors de ladite expansion radiale, un premier épaulement incliné tourné axialement à l'opposé desdites surfaces de butée axiale et formé sur la surface périphérique de la lèvre mâle tournée radialement vers l'extérieur, et un premier épaulement incliné tourné axialement vers lesdites surfaces de butée axiale et formé sur la surface périphérique du logement femelle tournée radialement vers l'intérieur, subissent un déplacement axial relatif l'un vers l'autre pour venir en contact mutuel étanche avec interférence radiale.

On entend ici par "contact étanche" un contact entre deux surfaces fortement pressées l'une contre l'autre de manière à réaliser une étanchéité métal sur métal.

Des caractéristiques optionnelles de l'invention, complémentaires ou de substitution, sont énoncées ci-après:
- La surface périphérique du logement tournée radialement vers l'intérieur comporte une cannelure annulaire à profil en arc concave qui présente un premier flanc tourné axialement vers lesdites surfaces de butée axiale et un second flanc tourné axialement à l'opposé desdites surfaces de butée axiale, le premier épaulement incliné du logement étant défini par ledit premier flanc.
- Le profil de la cannelure possède un rayon de courbure compris entre 5 et 30 mm, de préférence voisin de 10 mm.
- Les premiers épaulements inclinés de la lèvre et du logement sont présents sur le joint tubulaire initial.
- Les premiers épaulements inclinés présents sur le joint tubulaire initial sont axialement en vis-à-vis l'un de l'autre sur une partie au moins de leur hauteur radiale.
- La partie de la lèvre comprise entre son premier épaulement incliné et sa surface de butée axiale est au moins partiellement imprimée dans la surface de la cannelure lors de l'expansion.
- La cannelure se raccorde du côté de la seconde surface de butée axiale à une première partie de paroi périphérique et du côté opposé à une seconde partie de paroi périphérique de plus petit diamètre que la première partie de paroi périphérique.
- La différence entre les diamètres desdites parties de paroi périphérique est inférieure ou égale à 1 mm.
- Le premier épaulement incliné de la lèvre est formé par impression au moins partielle de celle-ci dans la surface de la cannelure lors de l'expansion.
- La cannelure est adjacente à la seconde surface de butée axiale.
- La cannelure se raccorde du côté de la seconde surface de butée axiale à une première partie de paroi périphérique et du côté opposé à une seconde partie de paroi périphérique sensiblement de même diamètre que la première partie de paroi périphérique.
- La cannelure se raccorde du côté de la seconde surface de butée axiale à une première partie de paroi périphérique et du côté opposé à une seconde partie de paroi périphérique de plus grand diamètre que la première partie de paroi périphérique.
- La différence entre les diamètres desdites parties de paroi périphérique est inférieure ou égale à 1 mm.
- La première partie de paroi périphérique du logement a un plus petit diamètre que la surface en vis-à-vis de la lèvre mâle de manière à produire une interférence radiale entre ces surfaces en fin de vissage.
- Le premier épaulement incliné de la lèvre mâle et/ou le premier épaulement incliné du logement sont munis d'un revêtement d'un matériau plus ductile que le matériau du substrat.
- L'expansion radiale du joint est réalisée selon un taux d'expansion au moins égal à 10 %.
- L'expansion radiale du joint est réalisée selon un taux d'expansion d'environ 15 %.
- La surface périphérique du logement tournée radialement vers l'intérieur comporte un second épaulement incliné tourné axialement à l'opposé du premier épaulement incliné et délimitant avec celui-ci une nervure annulaire.
- Les premier et second épaulements inclinés du logement se raccordent au sommet de la nervure annulaire par des arrondis.
- L'arrondi du second épaulement incliné du logement a un rayon de courbure plus grand que le rayon de courbure de l'arrondi du premier épaulement incliné.
- L'épaulement incliné de la lèvre mâle se raccorde par un arrondi convexe à la surface périphérique tournée radialement vers l'extérieur.
- Lesdits épaulements présentent une inclinaison comprise entre 5 et 20 °, de préférence voisine de 10 °, par rapport à l'axe longitudinal du joint.
- Lesdits épaulements présentent une hauteur radiale comprise entre 0,2 et 1 mm, de préférence voisine de 0,5 mm.
- Le premier élément tubulaire et le second élément tubulaire appartiennent respectivement à un tube de grande longueur et à un manchon destiné à raccorder celui-ci à un autre tube de grande longueur par un second joint tubulaire obtenu également par le procédé selon l'invention.
- La première surface de butée axiale est une surface saillante constituée par une languette annulaire et par une surface transversale adjacente à la languette et en retrait axial par rapport à celle-ci et reliée à la surface périphérique intérieure du premier élément et en ce que la seconde surface de butée axiale est une surface de butée rentrante constituée par une rainure annulaire et par une surface transversale adjacente à celle-ci reliée à la surface périphérique intérieure du second élément, la languette coopérant avec la rainure.
- Les premier et second filetages sont coniques de conicité au plus égale à 12,5 %.
- Les premier et second filetages sont cylindriques.
- La lèvre possède une épaisseur comprise entre 1/3 et 2/3 de l'épaisseur du premier élément tubulaire.
- La lèvre possède une longueur et une épaisseur telles que le rapport longueur sur épaisseur de lèvre est compris entre 1 et 4.
- Le premier élément tubulaire présente une gorge, en extrémité du premier filetage, entre filetage et lèvre.
- La gorge a une profondeur au plus égale à la hauteur des filets du premier filetage.
- La gorge a une longueur et une profondeur telles que sa longueur est comprise entre 2 et 15 fois sa profondeur.

L'invention a également pour objet un joint tubulaire initial utilisable pour la mise en oeuvre du procédé tel que défini ci-dessus, comprenant
- un premier élément tubulaire mâle, comportant un premier filetage mâle et une lèvre annulaire ayant une première surface de butée axiale en extrémité libre du premier élément, et
- un second élément tubulaire femelle, comportant un second filetage femelle, homologue du premier filetage, et un logement, homologue de la lèvre mâle, ayant une seconde surface de butée axiale,
le premier filetage étant propre à se visser dans le second filetage pour amener les deux surfaces de butée en contact mutuel, et la surface périphérique du logement tournée radialement vers l'intérieur comportant un premier épaulement incliné tourné vers la seconde surface de butée axiale.

L'invention vise encore un joint tubulaire étanche de hautes performances tel qu'on peut l'obtenir par le procédé précité, comprenant .
- un premier élément tubulaire mâle, comportant un premier filetage mâle et une lèvre annulaire ayant une première surface de butée axiale en extrémité libre du premier élément, et
- un second élément tubulaire femelle, comportant un second filetage femelle, homologue du premier filetage, et un logement, homologue de la lèvre mâle, ayant une seconde surface de butée axiale,
le premier filetage étant vissé dans le second filetage, un premier épaulement incliné tourné axialement à l'opposé desdites surfaces de butée axiale et formé sur la surface périphérique de la lèvre mâle tournée radialement vers l'extérieur, et un premier épaulement incliné tourné axialement vers lesdites surfaces de butée axiale et formé sur la surface périphérique du logement femelle tournée radialement vers l'intérieur, étant en contact mutuel étanche avec interférence radiale.

Les figures ci-après illustrent de manière non limitative des modes de réalisation de l'invention, des éléments identiques ou analogues étant désignés sur toutes les figures par les mêmes signes de référence.
La figure 1 représente un joint fileté initial du type général auquel s'applique l'invention.
La figure 2 représente l'élément mâle du joint fileté de la figure 1.
La figure 3 représente l'élément femelle du joint fileté de la figure 1.
Les figures 4 à 7 représentent le joint fileté de la figure 1 à diverses étapes du processus d'expansion.

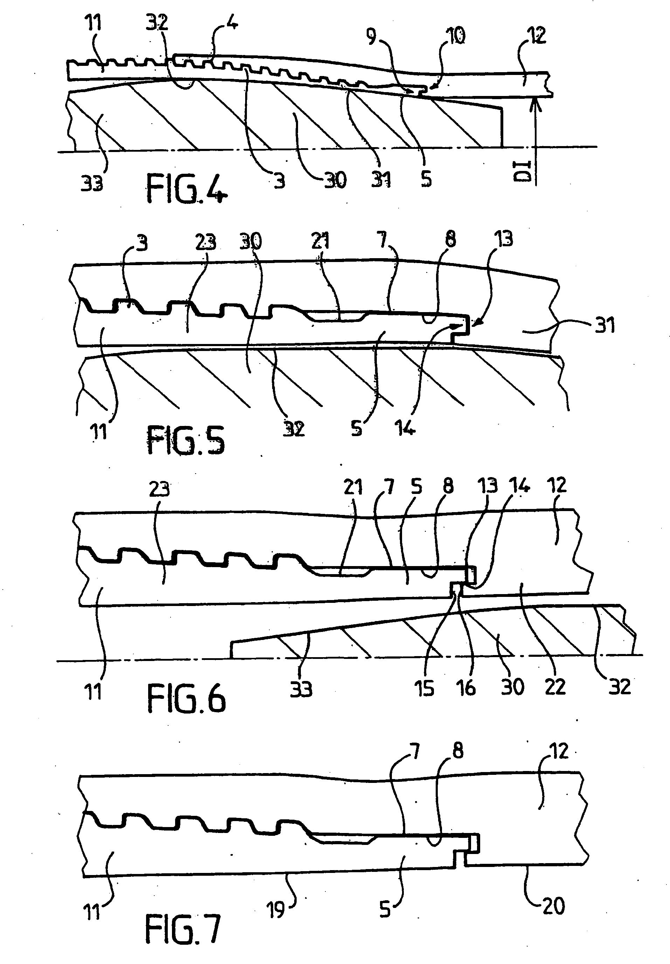

La figure 4 représente la phase d'expansion du joint fileté.
La figure 5 représente la phase de flexion.
La figure 6 représente la phase de redressement.
La figure 7 représente l'état final du joint fileté ayant subi le processus d'expansion.

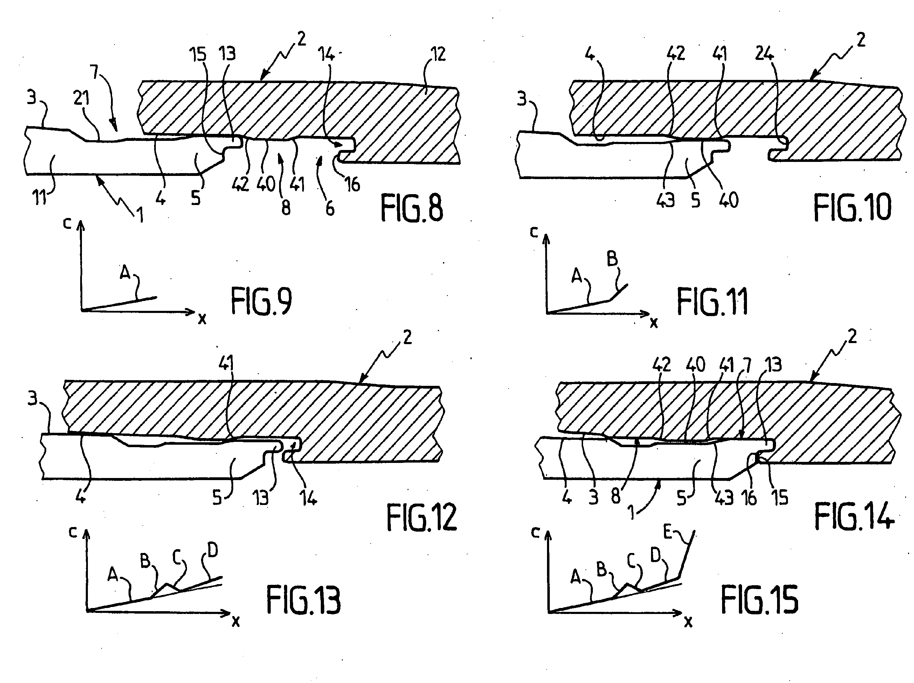

La figure 8 représente une première phase de vissage d'un joint selon l'invention avant expansion.
La figure 9 représente une courbe du couple de vissage lors de la phase de la figure 8.
La figure 10 représente une deuxième phase de vissage du joint selon l'invention avant expansion.
La figure 11 représente une courbe du couple de vissage de la figure 9 complétée par la phase de la figure 10.
La figure 12 représente une troisième phase de vissage du joint selon l'invention avant expansion.
La figure 13 représente une courbe du couple de vissage de la figure 11 complétée par la phase de la figure 12.
La figure 14 représente une quatrième phase de vissage du joint selon l'invention avant expansion.
La figure 15 représente une courbe du couple de vissage de la figure 13 complétée par la phase de la figure 14.

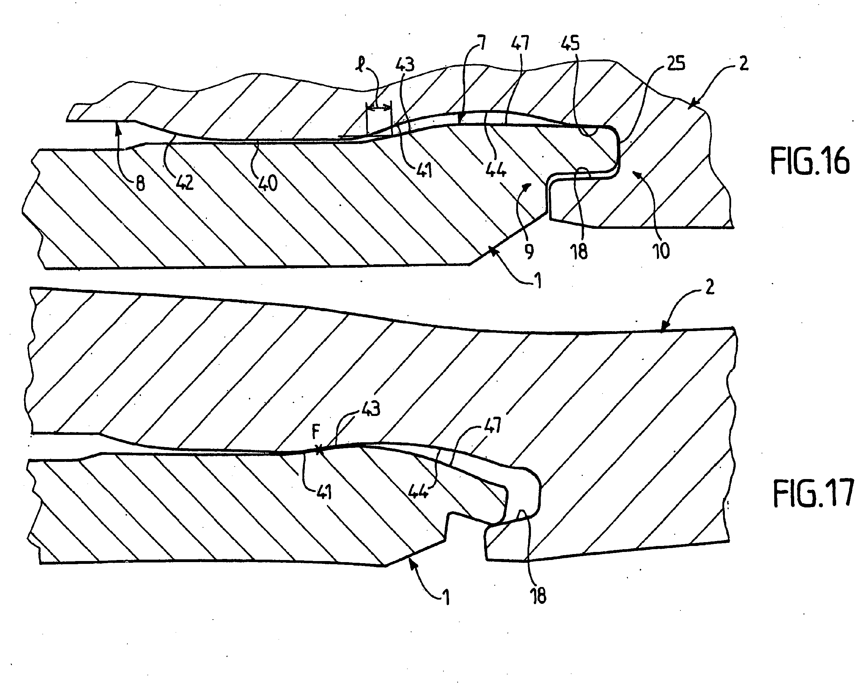

La figure 16 est une vue analogue à la figure 14, relative à une variante.
La figure 17 est une vue analogue à la figure 16, représentant le joint après expansion selon l'invention.

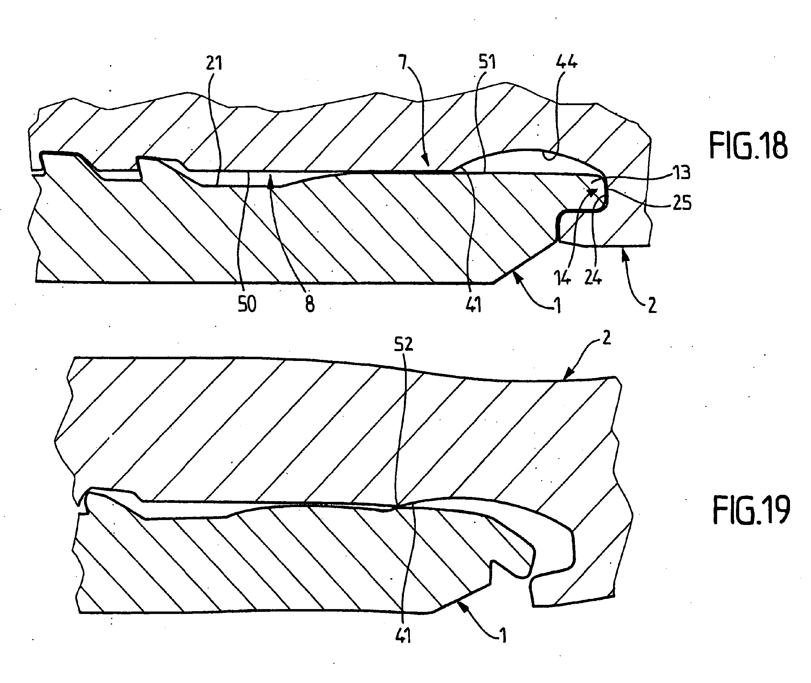

Les figures 18 à 23 sont des vues analogues aux figures 16 et 17, relatives à d'autres variantes, les figures paires et impaires représentant respectivement les joints initiaux et les joints après expansion.

Les dessins contiennent, pour l'essentiel, des éléments de caractère certain. Ils pourront donc non seulement servir à mieux faire comprendre la description, mais aussi contribuer à la définition de l'invention, le cas échéant.

On revient ici sur le forage de puits, pour hydrocarbures ou géothermie par exemple.

Traditionnellement, le haut d'un puits est d'abord foré sur une profondeur relativement faible de quelques dizaines de mètres à l'aide d'un outil de gros diamètre, de l'ordre par exemple de 500 mm, et est cuvelé à l'aide d'une colonne de tubes de ce diamètre. Le diamètre de forage diminue ensuite par pas jusqu'au fond du puits qui peut être foré avec un diamètre nettement plus faible, de l'ordre de 150 mm dans le même exemple. Un tel puits est alors cuvelé à l'aide de plusieurs colonnes de tubes concentriques, descendues chacune en fin de forage au diamètre correspondant et toutes suspendues depuis la surface; les tubes de plus gros diamètre s'étendent depuis la surface jusqu'à quelques dizaines de mètres de profondeur et les tubes de plus petit diamètre s'étendent depuis la surface jusqu'au fond du puits, dont la profondeur peut atteindre plusieurs milliers de mètres. L'espace entre les tubes de cuvelage et le terrain est par exemple cimenté.

Après que le puits est entièrement foré et cuvelé, une colonne de tubes de production peut être descendue pour permettre notamment la remontée des hydrocarbures jusqu'à la surface, c'est-à-dire l'exploitation effective du puits. On comprend que cette colonne de tubes de production possède un diamètre extérieur légèrement inférieur au diamètre intérieur de la colonne de tubes de cuvelage.

Équiper un puits conduit donc à mettre en oeuvre un grand nombre de tubes de différentes dimensions le plus souvent assemblés à l'aide de joints filetés compte tenu des avantages de ce type d'assemblage. On cherche à rendre ces tubes les plus minces possibles, pour ne pas nécessiter de trop gros diamètres de tubes de cuvelage près de la surface. Or le respect des contraintes et spécifications applicables aux joints filetés conduit souvent à leur donner une épaisseur plus grande que celle de la partie courante des tubes; ce qui oblige à augmenter la progression diamétrale entre colonnes concentriques, lorsqu'on descend en profondeur dans le puits.

L'assemblage des tubes entre eux a lieu soit par vissage des extrémités filetées des tubes les unes dans les autres (joints dits intégraux), soit à l'aide de manchons filetés recouvrant leurs extrémités. Les tubes sont descendus successivement après vissage dans l'extrémité du tube ou du manchon précédent.

La spécification API 5 CT de l'American Petroleum Institute (API) définit ainsi des joints filetés tubulaires entre deux tubes de grande longueur ("integral-joint tubing", "extreme-ligne casing"), ainsi que des assemblages filetés manchonnés comportant deux joints filetés permettant d'assembler deux tubes de grande longueur à l'aide d'un manchon. Ces joints API ne sont étanches que par l'adjonction d'une graisse chargée de particules métalliques qui remplit les interstices entre filets.

Bien entendu les liaisons entre tubes (ou entre tubes et manchons) doivent rester étanches quelles que soient les sollicitations que les tubes subissent lors de leur descente dans le puits et en service, et dans une large limite de masse supportée, puisque chaque joint soutient au moins partiellement des tubes situés au-dessous de lui. Aussi les performances mécaniques des joints filetés apparaissent-elles intimement liées à leurs caractéristiques géométriques.

Dans les joints filetés standards selon API, il existe toujours, malgré l'utilisation de graisses chargées de particules, un canal de fuite dans lequel un fluide à haute pression peut circuler du fait du jeu existant entre les surfaces non en contact. Pour une charge donnée en traction, il existe un seuil de pression du fluide, au-delà duquel l'effort combiné de traction et pression provoque sur les joints filetés API d'abord une fuite pouvant entraîner un désengrènement des filetages des parties mâles et femelles en contact.

Les joints et assemblages filetés ont fait l'objet, pour éviter cela, de différents perfectionnements: par exemple les brevets FR 1489013, EP 0488912, US 4494777 ont visé à réaliser des joints filetés tubulaires dits supérieurs ou "premium" particulièrement étanches grâce à des portées d'étanchéité métal-métal interférant radialement l'une sur l'autre et à des butées entre éléments mâles et femelles judicieusement arrangées de manière à garantir une plage donnée d'interférence entre portées d'étanchéité.

Comme indiqué, après descente d'une colonne tubulaire dans un puits, on envisage de soumettre celle-ci à une expansion diamétrale, avec déformation plastique permanente. Ceci se fait par exemple à l'aide d'un boulet dont le passage est forcé à l'intérieur de la colonne: voir brevets ou demandes de brevet WO 93/25799, WO 98/00626, WO 99/06670, WO 99/35368, WO 00/61915, GB 2344606, GB 2348657. Ceci offre des potentialités très intéressantes:
- descendre une colonne de faible encombrement, qui est ensuite expansée à force;
- mettre en place de cette façon une colonne de tubes de cuvelage,
- de même, colmater in situ les trous d'un tube de cuvelage
ou de production percé par la corrosion ou par le frottement des tiges de forage, ou bien descendre dans le puits des tubes de faible encombrement qui seront expansés au diamètre souhaité une fois en place.
- enfin et surtout, permettre de forer des puits de diamètre uniforme sur toute leur longueur, dont le cuvelage est réalisé par une colonne de tubes tous de même diamètre, des parties de colonnes étant introduites à l'état non expansé, puis étant expansées in situ au diamètre de parties de colonnes expansées déjà en place et raboutées à celles-ci.

Il serait alors possible de diminuer fortement le nombre de tubes nécessaires pour équiper un puits, en supprimant les tubes de plus gros diamètre et de plus forte épaisseur. Le coût du puits est diminué en conséquence. Il peut même être envisagé de forer le puits directement avec la colonne de tubes de cuvelage, qui jouerait le rôle de train de tiges de forage.

Il s'est avéré que réaliser des joints filetés qui tiennent leurs performances après une expansion pouvant dépasser 10 % voire atteindre 25 % est extrêmement délicat, d'autant plus que ceci doit être fiable (tous les joints doivent tenir) et stable dans les conditions de fonctionnement.

On connaît par US 5924745 et WO 98/42947 des assemblages filetés tenant l'expansion. Mais il s'agit ici d'assembler des tubes dits EST (expandable slotted tubings), munis de fentes longitudinales traversantes, et sujets à expansion diamétrale au fond de puits d'hydrocarbures (par passage d'un mandrin d'expansion dans ces tubes); élargies, les fentes permettent à un fluide extérieur au tube (hydrocarbure provenant du gisement) d'entrer dans le tube pour y être remonté en surface. Dans ce cas, l'étanchéité des assemblages n'a manifestement pas d'importance, et, étant en fond de puits, ils n'ont pas une aussi grande charge mécanique.

En fait, les premières propositions d'expansion plastique de colonnes tubulaires étanches se fondent sur des joints soudés (bobines de tubes aboutés préalablement par soudage, déroulées depuis la surface) ou encore sur des joints frottants ("slips"). Mais de tels joints ne possèdent pas les performances des joints filetés, en particulier en ce qui concerne la combinaison de la résistance mécanique, de l'étanchéité en toutes conditions de service, et aussi de la possibilité de démontage/remontage plusieurs fois de suite.

Il s'est avéré que les joints filetés tubulaires classiques tels que ceux selon le brevet US 4494777 ne supportent pas l'expansion diamétrale plastique. On constate après expansion sur ces joints:
- une absence d'étanchéité (qui empêche accessoirement de réaliser l'expansion en poussant hydrauliquement le boulet dans la colonne);
- une flèche de l'extrémité mâle vers l'intérieur du joint qui réduit considérablement et de manière inacceptable le diamètre intérieur opérationnel de la colonne en réalisant une saillie intérieure dans l'espace défini par le diamètre intérieur opérationnel;
- éventuellement la rupture de la lèvre d'extrémité mâle par dépassement de la capacité de déformation de certaines zones particulièrement sollicitées du fait des variations d'épaisseur tout au long des éléments mâles et femelles par rapport à l'épaisseur au corps du tube.

On a donc cherché à réaliser un joint fileté tubulaire qui soit apte à résister à l'opération d'expansion dans le puits et qui soit étanche aux liquides voire si possible aux gaz après ladite opération d'expansion. On a aussi cherché à ce que le joint fileté tubulaire soit simple et économique à produire. On a en outre cherché à ce que le joint fileté possède de bonnes caractéristiques métallurgiques en service donc après expansion, notamment à ce qu'il présente dans cet état une limite d'élasticité suffisante, à ce qu'il soit exempt de fragilité et à ce qu'il présente de bonnes caractéristiques à la fissuration sous contrainte par H2S.

On connaît des joints filetés ayant une lèvre mâle en correspondance avec un logement femelle (US 4611838, US 3870351, WO 99/08034, US 6047997). Il s'est avéré que ces montages connus ne tiennent pas l'étanchéité après expansion plastique, qui n'y est d'ailleurs nullement envisagée.

Un mode de réalisation d'un joint d'étanchéité métal contre métal en forme de doigt adapté à cette technique est décrit dans la demande internationale PCT/FR01/02005 précitée. Cependant avec ce mode de réalisation, il arrive pour les taux d'expansions les plus élevés que les contraintes mécaniques subies par les tubes lors du passage du boulet désengagent le doigt de son logement, entraînant une étanchéité insuffisante voire une absence d'étanchéité au niveau des joints.

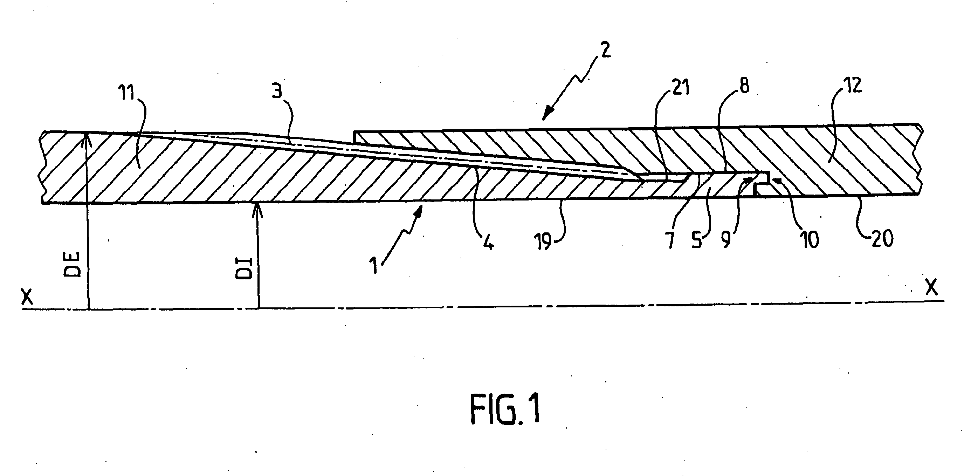

La figure 1 représente à titre explicatif un joint selon la demande PCT/FR01/02005 publiée sous le N° WO 02/01102, non conforme à la présente invention, comprenant un élément fileté mâle 1 disposé en extrémité d'un premier tube 11. Cet élément mâle est vissé en butée dans un élément fileté femelle 2 disposé en extrémité d'un second tube 12. Le diamètre intérieur de l'élément fileté mâle est ici égal au diamètre intérieur DI des tubes 11, 12. Dans le mode de réalisation de la figure 1, le diamètre extérieur de l'élément fileté femelle est égal au diamètre extérieur DE des tubes 11, 12 à titre d'exemple uniquement.

Le joint est représenté sur la figure 1 à l'état simplement vissé en butée avant toute opération d'expansion diamétrale.

Le second tube 12 tel que représenté est un tube de grande longueur. Ce second tube pourrait être, de manière non représentée, un manchon muni d'un côté de l'élément femelle 2 et de l'autre côté d'un second élément femelle symétrique ou non de ce dernier et vissé à un élément mâle situé en extrémité d'un autre tube de grande longueur.

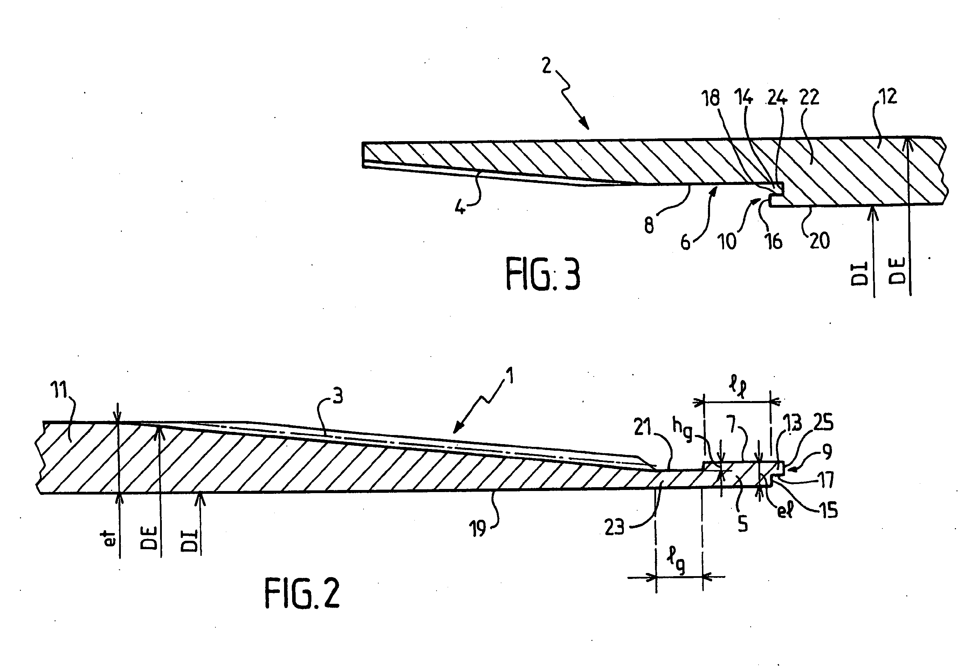

Seul l'élément mâle 1 est représenté sur la figure 2.

Il comprend un filetage mâle 3, conique à filets trapézoïdaux, et se prolonge vers son extrémité libre par une partie non filetée constituée par une gorge 21 et par une lèvre 5 et se termine par une surface annulaire d'extrémité mâle 9.

La gorge 21 possède une forme en U peu profonde.

Elle démarre immédiatement au-delà du filetage et sa profondeur h_{g} est inférieure à la hauteur des filets du filetage 3. De la sorte le fond de la gorge arrive au pied du premier filet du filetage.

La largeur de la gorge l_{g} est sensiblement égale à 4 fois sa profondeur h_{g}.

La lèvre 5 présente:
a) une surface périphérique extérieure 7 de forme cylindrique,
b) une surface périphérique intérieure 19 qui correspond à la zone d'extrémité de la surface périphérique intérieure cylindrique du premier tube 11,

La lèvre 5 possède donc une épaisseur eₗ uniforme sensiblement égale à la moitié de l'épaisseur et du tube 11. Elle possède une longueur lₗ mesurée depuis l'extrémité de la gorge jusqu'à l'aplomb de la surface 15 (définie plus bas) sensiblement égale à 3 fois l'épaisseur de lèvre eₗ.

La surface d'extrémité mâle 9 forme une feuillure. Cette feuillure est constituée d'une surface transversale annulaire mâle 15 et d'une languette 13 annulaire se projetant axialement, adjacente à la surface transversale 15. La surface transversale mâle 15 est située du côté de la feuillure dirigé vers l'intérieur du joint fileté.

La surface périphérique extérieure de la languette 13 est dans le prolongement de la surface 7 de la lèvre tandis que sa surface périphérique intérieure 17 est par exemple cylindrique.

L'épaisseur radiale de la languette 13 est sensiblement identique à celle de la surface transversale 15 tandis que la hauteur de la languette (ou projection axiale de celle-ci) est sensiblement égale à l'épaisseur radiale de cette même languette. Elle peut aussi être égale à 1,5 fois cette épaisseur radiale pour mieux maintenir l'extrémité libre de la languette lors de l'expansion.

L'élément femelle 2 est représenté seul à la figure 3.

Il comprend, en partant de l'extrémité libre de l'élément femelle, un filetage femelle 4 à filets trapézoïdaux homologue du filetage mâle 3 puis une partie non filetée 6. Cette partie non filetée 6 forme un logement pour correspondre et coopérer avec la lèvre 5 de l'élément mâle 1.

Le logement femelle 6 présente une surface périphérique 8 tournée vers l'intérieur, de forme cylindrique, reliée d'un côté au filetage femelle 4 et de l'autre côté via un épaulement femelle 10 à la surface périphérique intérieure cylindrique 20 du second tube 12.

De manière générale, le diamètre de la surface périphérique 8 du logement est très légèrement supérieur au diamètre de la surface périphérique extérieure 7 de la lèvre mâle 5. De cette façon, les surfaces 7 et 8 peuvent coulisser l'une dans l'autre à faible jeu lors du vissage de l'élément mâle dans l'élément femelle, par exemple avec un jeu de 0,2 mm. L'avantage d'un tel coulissement sera exposé plus loin.

L'épaulement femelle présente une surface annulaire d'épaulement 10 qui est disposée de manière sensiblement correspondante et possède une forme sensiblement homologue à celle d'extrémité mâle 9. La surface 10 forme une feuillure constituée d'une surface annulaire transversale femelle 16 et d'une rainure annulaire 14 adjacente à la surface transversale 16.

La surface transversale femelle 16 est située du côté de la feuillure dirigé vers l'intérieur du joint fileté.

La paroi 18 de la rainure 14 adjacente à la surface transversale 16 est par exemple cylindrique et peut se raccorder à cette dernière par un chanfrein ou un arrondi. La paroi opposée de la rainure est dans le prolongement de la surface périphérique 8. Lors du vissage du joint fileté, la surface 17 de la languette "monte" sur la paroi 18 de la rainure jusqu'à ce que l'extrémité libre transversale 25 de la languette arrive contre le fond 24 de la rainure 14. La hauteur axiale hᵣ de la languette 14 et la profondeur axiale Pᵣ de la rainure sont telles que les surfaces transversales 15 et 16 ne viennent en contact qu'après un vissage supplémentaire. Le faible jeu entre les surfaces cylindriques 7 et 8 et entre les surfaces de la languette et de la rainure qui les prolongent permet l'évacuation de la graisse en fin de vissage et donc un positionnement correct de la lèvre 5 par rapport au logement 6.

Les figures 4 à 7 explicitent les phénomènes de déformation qui se produisent lorsque l'on réalise au moyen d'un boulet une expansion diamétrale de l'ordre de 15 % sur des tubes assemblés par les joints filetés qui viennent d'être décrits et qui permettent d'obtenir en final un joint expansé étanche.

Une telle déformation effectuée sur des matériaux métalliques conduit à des déformations plastiques du métal.

On passe ainsi par exemple d'un diamètre extérieur de 139,7 mm (5,5 in) sur le deuxième tube 12 en amont de l'expansion et par conséquent dans la partie non encore déformée à un diamètre extérieur de 157,5 mm (6,2 in) sur le premier tube 11 expansé (à l'aplomb ou en aval du cône de sortie 33 du boulet). Il faut de ce fait utiliser pour les tubes un métal qui accepte de telles déformations plastiques.

Les déformations plastiques générées augmentent la limite d'élasticité des produits: un tube possédant initialement une limite d'élasticité de 310 MPa (45 KSI) voit ainsi celle-ci augmenter à 380 MPa (55 KSI) après déformation.

L'expansion diamétrale est réalisée de manière connue à l'aide d'un boulet 30 (figure 4) de diamètre maximal adéquat. On force le passage de ce boulet dans les tubes soit en le tirant à l'aide de tiges de forage soit en le poussant par exemple par une pression hydraulique.

Le boulet a par exemple une forme biconique avec un cône d'entrée 31 sur lequel se fait l'expansion, une partie cylindrique médiane 32 et une partie conique de sortie 33. Toutes les surfaces des parties de boulet sont raccordées entre elles par des rayons de raccordement adaptés.

WO 93/25800 divulgue notamment des angles de cônes d'entrée particulièrement adaptés à l'expansion diamétrale de tubes dits EST pour l'exploitation de puits d'hydrocarbures.

Les tubes 11, 12 ayant une section sensiblement constante, leurs extrémités ne posent pas de problème particulier lors du passage du boulet pourvu que la capacité de déformation du métal dont ils sont faits soit suffisante.

Les problèmes à résoudre viennent du fait que les éléments filetés en extrémité des tubes ont des épaisseurs plus faibles que celles des corps des tubes et localement variables, sont plus ou moins maintenus et tendent à se déformer de manière différente entre les parties mâles et les parties femelles correspondantes.

Ces déformations différentes, si elles sont maîtrisées en utilisant le joint fileté selon l'invention, permettent de réaliser un joint fileté étanche après expansion diamétrale ne présentant pas de relief local rédhibitoire à l'intérieur de la surface périphérique intérieure des tubes.

Le processus d'expansion du joint fileté peut être décomposé en 4 phases qui font l'objet des figures 4 à 7.

Bien que l'opération d'expansion puisse tout à fait être effectuée dans le sens contraire et conduire à des résultats adéquats, on a représenté le mode préféré de déformation dans lequel le boulet se déplace de l'élément mâle 1 du premier tube 11 vers l'élément femelle 2 du second tube 12.

### a) Phase d'expansion sur le cône du boulet

La figure 4 montre le joint fileté au cours de cette phase.

L'expansion est réalisée par le cône d'entrée 31 du boulet 30 et la figure 4 montre les filetages mâles 3 et femelles 4 en cours d'expansion diamétrale.

Sur la figure 4, le cône d'entrée 31 du boulet 30 amorce la déformation de la lèvre mâle et de la zone de logement homologue femelle en les pliant pour les incliner par rapport à l'axe de l'assemblage.

Au cours de cette phase d'expansion, les efforts de réaction au passage du boulet 30 sont progressivement transférés du premier tube 11 vers le deuxième tube 12.

Du fait de ces efforts de réaction, la lèvre mâle 5 est comprimé axialement au cours de cette phase d'expansion par la surface annulaire d'épaulement femelle 10.

La fin de la phase d'expansion correspond à l'arrivée de l'extrémité libre de l'élément mâle à la fin du cône d'entrée 31 du boulet.

### b) Phase de flexion

Au cours de cette phase, la lèvre mâle est située au niveau de la partie centrale 32 du boulet: voir figure 5.

### i) lèvre mâle

La lèvre mâle 5 est soumise à chacune de ses deux extrémités à des moments de flexion de sens opposés.

La surface d'extrémité mâle 9 est en effet maintenue en position dans la surface d'épaulement femelle 10 du fait des feuillures avec appuis 15, 16 et du système d'emprisonnement languette 13/rainure 14.

L'emprisonnement des feuillures oblige la zone d'extrémité libre de la lèvre mâle 5 à suivre l'inclinaison de la zone 22 de pleine épaisseur de l'élément femelle au-delà de l'épaulement. Cette zone 22 est encore en cours d'expansion sur le cône d'entrée 31 du boulet et crée donc un moment de flexion à ce niveau.

L'autre extrémité de la lèvre, du côté filetage mâle 3, n'est plus supportée et impose au contraire à la lèvre un moment de flexion opposé à celui en extrémité libre de lèvre.

Les moments de flexion de signe opposé aux deux extrémités de la lèvre mâle entraînent la courbure en banane de la lèvre mâle 5 comme sur la figure 5, la surface périphérique extérieure 7 de la lèvre 5 prenant une forme bombée convexe.

L'état de compression axiale de la lèvre mâle 5 en fin de phase d'expansion facilite sa courbure sous l'effet des moments de flexion.

La gorge 21 située entre la lèvre mâle 5 et le filetage mâle 3 joue le rôle d'une rotule plastique qui accentue la courbure de la lèvre mâle en limitant la largeur sur laquelle cette courbure peut s'effectuer.

Il faut toutefois veiller dans ce cas à ce que les contraintes de compression axiale au niveau de la lèvre mâle n'induisent pas le flambement du métal 23 sous la gorge. Ce flambement se traduirait par une saillie du métal sous la gorge par rapport à la surface périphérique intérieure 19.

### ii) logement femelle

Le même phénomène de flexion se produit sur le logement femelle.

La zone 22 de pleine épaisseur relativement rigide par rapport aux zones de lèvre relativement minces subit à son passage au niveau de la partie médiane une expansion additionnelle de sorte que le diamètre intérieur de la zone 22 devient supérieur à celui de la zone médiane 32 du boulet. Le phénomène d'expansion additionnelle est décrit dans le document WO 93/25800.

### c) Phase de redressement

Cette phase illustrée par la figure 6 correspond au passage de la zone 22 de pleine épaisseur femelle sur la partie médiane 32 du boulet 30.

### i) logement femelle

La flexion générée dans la phase précédente tend à être ramenée à zéro sous l'effet de la tension et des contraintes circonférentielles, ce qui génère un état de contraintes axiales de flexion inverse par rapport à la courbure, produisant ainsi le redressement.

Le moment de flexion engendré par ces contraintes est proportionnel à l'épaisseur de matière en amont du redressement. Au moment d'arriver sur le tube 12 en pleine épaisseur (zone 22), le moment de flexion n'est pas suffisant pour redresser la zone périphérique intérieure du logement femelle qui tend à plonger alors vers l'axe du produit. Ce comportement se manifeste par une diminution locale de diamètre extérieur du tube 12.

### ii) lèvre mâle

Au fur et à mesure du redressement de la partie femelle, la différence d'encombrement axial qui était générée par la flexion diminue. La lèvre mâle 5 perd donc progressivement son état de compression. Cela se poursuit avec la séparation des surfaces 15, 16 initialement en butée. Ce phénomène est renforcé par "le plongeon" de la surface périphérique intérieure 8 du logement femelle qui produit un effet d'ouverture des butées 15, 16.

La déformation en banane imposée dans la phase précédente est conservée.

### d) État final

La figure 7 montre l'état final du joint fileté après le passage du boulet.

L'état de contraintes circonférentielles généré par l'expansion conduit à un frettage de la surface périphérique extérieure 7 de la lèvre mâle par celle intérieure 8 du logement femelle. On peut alors parler d'auto-frettage des surfaces 7, 8 du joint fileté à l'état expansé, ce qui permet d'assurer l'étanchéité. La lèvre mâle 5 ne plonge pas vers l'axe, car le déport radial imposé par l'emprisonnement des feuillures 9, 10 a généré suffisamment de déformations plastiques.

Le retour élastique des éléments du joint fileté après passage du boulet est négligeable devant les déformations plastiques mises en jeu.

Le frettage radial induit une pression de contact de plusieurs dizaines de MPa voire de plus de 100 MPa, suffisante pour assurer une étanchéité aux pressions intérieures ou extérieures au joint fileté. La longueur de frettage est suffisant sur toute la périphérie des surfaces de contact pour assurer une étanchéité stable entre celles-ci.

Une étanchéité est par ailleurs nécessaire lorsque l'expansion est réalisée en poussant hydrauliquement le boulet 30 sous une pression de 10 à 30 MPa, toute fuite au niveau des joints déjà expansés empêchant la pénétration du boulet plus avant dans la colonne et bloquant par conséquent le processus d'expansion.

On notera qu'à l'état final, il peut très bien advenir que la languette 13 ne repose plus dans la rainure 14 .

Une surface d'extrémité mâle 9 non emprisonnée dans celle d'épaulement femelle 10 entraîne une plongée de cette extrémité lors de la phase de redressement qui voit la séparation des surfaces transversales 15 et 16 initialement en butée et il s'ensuit une saillie inacceptable de l'extrémité inférieure de la lèvre mâle à l'intérieur de la colonne. La colonne ne permet alors plus de descendre des appareillages ou des outils d'un encombrement donné.

Un jeu trop important entre surface périphérique 7 de la lèvre mâle 5 et surface périphérique 8 du logement femelle sur le joint fileté avant expansion ne permettrait pas le frettage de ces surfaces en fin d'opération d'expansion.

Une interférence radiale entre ces surfaces à l'état initial avant expansion est susceptible de gêner les déformations différentielles (courbure, redressement) entre ces surfaces lors des opérations d'expansion, déformations différentielles permettant de réaliser le frettage de ces surfaces en fin d'opération d'expansion. Elle risque aussi d'entraîner un grippage de ces surfaces lors du vissage et un mauvais positionnement des éléments avec un emprisonnement incorrect des surfaces 9 et 10 et par là un frettage médiocre des surfaces 7 et 8 après expansion.

Dans un mode de réalisation préféré, la forme en feuillure annulaire avec surfaces transversales 15, 16 et système languette 13/rainure 14 permet d'empêcher la plongée de l'extrémité libre mâle lors de l'expansion. D'autres modes de réalisation des surfaces encastrées 9, 10 sont possibles afin de donner le même résultat.

Une lèvre mâle 5 trop mince, d'épaisseur le inférieure au tiers de l'épaisseur et des tubes 11, 12 ne permet pas de réaliser une butée efficace au niveau des surfaces transversales 15, 16.

Si l'épaisseur eₗ de la lèvre mâle 5 est au contraire supérieure aux 2/3 de l'épaisseur et des tubes 11,12, l'épaisseur du tube 12 au niveau de la zone de logement femelle entraîne une section critique de filetage femelle 4 trop faible et par conséquent une résistance insuffisante à la traction des filetages.

Le rapport longueur/épaisseur de lèvre mâle 5 régit le comportement en compression et en flexion de la lèvre 5.

Une lèvre mâle 5 de longueur lₗ inférieure à son épaisseur le ne permet pas la flexion suffisante de la surface périphérique 7 de la lèvre mâle 5 et/ou le redressement de la surface périphérique 8 du logement femelle.

Une lèvre mâle 5 de longueur lₗ supérieure à 4 fois son épaisseur eₗ peut entraîner un flambement de la lèvre mâle et une saillie intérieure de celle-ci du côté filetage.

Cet effet est accentué par la présence d'une gorge 21 entre filetage mâle 3 et lèvre mâle 5.

C'est pourquoi la gorge a préférentiellement une profondeur limitée à une hauteur de filet et une longueur limitée par rapport à sa profondeur.

Une languette 13 d'épaisseur radiale insuffisante et de hauteur axiale inférieure à l'épaisseur radiale ne pourrait être maintenue suffisamment lors de l'expansion.

On se réfère à la figure 8 montrant une des deux parties symétriques de la coupe axiale d'un premier mode de réalisation du joint selon l'invention en phase de vissage.

La figure 8 représente le joint comprenant l'élément fileté mâle 1 comportant le filetage mâle 3 disposé en extrémité du premier tube 11. Cet élément mâle est en cours de vissage dans l'élément fileté femelle 2 comportant le filetage femelle 4 disposé en extrémité du second tube 12.

La lèvre annulaire 5 présente la surface périphérique 7 tournée radialement vers l'extérieur. Cette surface périphérique 7 de la lèvre comporte, en partant du filetage mâle, la gorge 21 suivie d'une première surface cylindrique puis d'un épaulement incliné 43 et d'une deuxième surface cylindrique. La première surface cylindrique a un diamètre plus petit que la deuxième surface cylindrique.

Le logement 6 présente la surface périphérique 8 tournée radialement vers l'intérieur. Cette surface périphérique 8 du logement comporte, en partant du filetage femelle, un premier épaulement incliné 42 suivi d'un deuxième épaulement incliné 41 de manière à former une nervure annulaire 40 à sommet cylindrique entre les deux épaulements inclinés. La nervure annulaire a une hauteur de l'ordre de plusieurs dixièmes de millimètres (par exemple 0,4 mm).

Les figures 8, 10, 12 et 14 présentent les étapes du montage du joint de l'invention. Les figures 9, 11, 13 et 15 illustrent le couple de serrage associé aux étapes de montage.

Ainsi, la figure 8 illustre la phase initiale de vissage du joint de l'invention. La surface périphérique 7 de la lèvre est déplacée en rotation contre la surface périphérique 8 du logement. La figure 9 montre l'évolution linéaire à faible pente du couple de vissage requis pour cette phase de vissage A.

La figure 10 illustre le passage du sommet de la nervure 40 par la lèvre 5. Ainsi, lors du déplacement axial de l'élément mâle 1, l'épaulement incliné 42 formant en partie la nervure 40 sur l'élément femelle fait obstacle à la progression du déplacement axial de l'élément mâle 1. Ainsi, la valeur du couple de vissage est augmenté afin que la lèvre 5 passe sur l'épaulement incliné 42. La lèvre est alors soumise à des contraintes radiales qui tendent à la comprimer radialement élastiquement. Cette phase de vissage est montrée sur la figure 11 : la pente du couple de vissage augmente dans la partie B. Le couple de vissage garde ensuite la même pente tant que le sommet de la nervure 40 est au contact de la deuxième surface cylindrique.

La figure 12 illustre la fin du passage du sommet de la nervure 40 par la lèvre 5. Ainsi, lorsque l'épaulement incliné 43 de la lèvre 5 arrive au niveau de l'épaulement incliné 41 du logement, les contraintes radiales diminuent sur la lèvre 5 qui se détend alors élastiquement. Le couple de vissage est alors également fortement diminué. Sur la figure 13, ce phénomène se traduit par une pente du couple de vissage négative en partie C. Puis, la languette 13 vient au contact de la surface supérieure de la rainure 14 afin de se loger dans cette dernière. Le couple de vissage correspond alors à la partie D qui présente une pente du couple de vissage redevenant positive. Cette pente est légèrement supérieure à celle de la partie A.

L'épaisseur radiale de la languette 13 étant légèrement inférieure à celle de la rainure 14, les surfaces inférieures de celles-ci ne sont pas en contact mutuel.

La figure 14 illustre la fin de l'insertion de la languette 13 dans la rainure 14. Ainsi, selon la figure 14, la languette 13 a une dimension axiale suffisante pour qu'elle puisse venir en butée axiale au fond 24 de la rainure 14. La figure 15 montre le surcouple de vissage en partie E correspondant à la pression de contact entre la languette 13 et la rainure 14. En outre, une certaine étanchéité peut être obtenue à ce stade entre les surfaces périphériques supérieures de la languette 13 et de la rainure 14.

Dans une autre réalisation géométrique de la languette 13, cette dernière n'a pas une dimension axiale assez longue pour venir au contact du fond de la rainure 14. Le surcouple de vissage de la figure 15 correspond au cas où la surface annulaire mâle 15 vient en butée contre la surface annulaire femelle 16.

Dans les phases de vissage D et E, les épaulements inclinés 41 du logement et 43 de la lèvre sont en regard l'un de l'autre.

Avantageusement, lors du montage du joint, les parties B et C permettent de déterminer que la nervure a été passée, indiquant la dernière phase du vissage.

La surface d'extrémité mâle 9 de la lèvre qui forme une première surface de butée axiale comprend la languette 13 dont les bords annulaires sont arrondis.

La surface d'épaulement femelle 10 du logement qui forme une seconde surface de butée axiale comprend la rainure 14 et la surface annulaire transversale femelle 16, le bord annulaire reliant la rainure à la surface annulaire 16 étant arrondi. Ce bord arrondi coopère avec le bord intérieur arrondi de la languette 13 lors d'une phase de vissage requérant l'insertion de la languette 13 dans la rainure 14 entre les étapes C et D.

De même, l'épaulement incliné 43 de la lèvre mâle se raccorde par arrondi, en allant vers l'extrémité de la lèvre, à une partie de la surface périphérique tournée radialement vers l'extérieur. Cet arrondi annulaire a un rayon de courbure de l'ordre de quelques millimètres (5 mm par exemple).

Préférentiellement, les épaulements inclinés 41 et 42 du logement délimitent la nervure annulaire. Le sommet de cette nervure annulaire comprend une surface cylindrique délimitée de chaque côté par un arrondi. L'arrondi annulaire de chacun des épaulements inclinés 41 et 42 a un rayon de courbure de l'ordre de quelque millimètres (respectivement 5 mm et 9 mm par exemple).

Ces arrondis annulaires des épaulements inclinés 41 et 42 du logement coopèrent avec le bord arrondi extérieur de la languette 13 lors des phases de vissage B et C.

Ainsi, l'arrondi annulaire de l'épaulement incliné 42 du logement permet de réduire le risque de grippage lors du passage de la languette.

Dans la variante de la figure 16, la surface périphérique 8 du logement tournée radialement vers l'intérieur comporte une cannelure annulaire 44 présentant un profil concave sensiblement en arc de cercle d'un rayon d'environ 10 mm, qui se raccorde du côté de la seconde surface de butée axiale 10 à une première partie de paroi périphérique 45 et du côté opposé à une seconde partie de paroi périphérique qui constitue le sommet de la nervure 40, de plus petit diamètre que la partie de paroi 45, le premier épaulement incliné 41 définissant le flanc de la cannelure 44 du côté de la nervure.

Dans cette même variante, la surface périphérique 7 de la lèvre tournée radialement vers l'extérieur comporte une partie cylindrique 47 disposée entre le premier épaulement incliné 43 et la première surface de butée axiale 9. L'espace entre le fond de la cannelure 44 et la partie cylindrique 47 et les jeux permettent l'évacuation correcte de la graisse lors du vissage.

Lors de l'expansion du joint, la forme concave de la cannelure 44 imprime une forme convexe correspondante à la surface périphérique 7 de la lèvre, dont le diamètre maximal est ainsi accru par rapport à celui obtenu avec la configuration de la figure 14, de sorte que la pression de contact des surfaces d'étanchéité des deux éléments est augmentée, conduisant à une étanchéité plus stable.

Dans un mode de réalisation avantageux de l'invention, le joint en dernière phase de vissage est propre à être expansé suivant un taux d'expansion compris entre 10 % et 25 %, le taux d'expansion préféré étant de 15 %.

Sur la figure 16, l'épaulement incliné 41 du logement et l'épaulement incliné 43 de la lèvre sont éloignés d'une distance axiale 1. Cette distance axiale 1 est fonction du taux d'expansion choisi du joint de manière à ce que sous déformation radiale selon le taux d'expansion choisi, l'épaulement incliné 41 du logement et l'épaulement incliné 43 viennent en contact étanche l'un contre l'autre.

L'expansion radiale entraîne en effet une déformation axiale provoquant un déplacement relatif de l'épaulement incliné 41 du logement et de l'épaulement incliné 43 de la lèvre. Le sens axial d'expansion est indifférent, le contact entre épaulement inclinés 41 et 43 résultant soit d'un rapprochement de l'épaulement incliné 41 du logement contre l'épaulement incliné 43 de la lèvre, soit inversement, du rapprochement de l'épaulement incliné 43 de la lèvre contre l'épaulement incliné 41 du logement.

Dans le cas d'un taux d'expansion de 15 %, la distance axiale l est de quelques millimètres (par exemple 2 mm).

Sur la figure 17, le joint est représenté après expansion selon un taux d'expansion choisi, par exemple de 15 %, comme précédemment décrit.

Ainsi, les déformations radiales de l'expansion ont entraîné des déformations axiales de la lèvre 5 et du logement 6. L'épaulement incliné 43 de la lèvre vient au contact au moins en un point F avec l'épaulement incliné 41 du logement, ou inversement. Ce contact étanche reste stable même sous tension. Dans le cas d'un taux d'expansion plus important que la valeur théorique choisie, le contact étanche est renforcé.

La cannelure imprime à la lèvre mâle une courbure locale plus importante qui tend à favoriser le contact entre la languette 13 et le flanc 18 de la rainure 14. Ce contact permet de verrouiller et de stabiliser le comportement de la lèvre sous la pression, notamment intérieure, d'un fluide.

L'élément femelle 2 du joint tubulaire initial représenté sur la figure 18 diffère de celui de la figure 16 d'une part par la suppression de l'épaulement 42, et de la nervure 40 que celui-ci délimitait avec l'épaulement 41, d'autre part par la suppression de la partie de paroi périphérique 45. La surface périphérique 8 du logement tournée radialement vers l'intérieur est donc composée de la cannelure 44, qui se raccorde directement au fond 24 de la rainure 14, et d'une partie de paroi cylindrique 50 qui se raccorde à la cannelure 44 à l'opposé de la rainure 14. L'épaulement 43 de l'élément mâle 1 est également supprimé, de sorte que la surface périphérique 7 de la lèvre tournée radialement vers l'extérieur comprend une partie de surface cylindrique 51 s'étendant de manière continue depuis la gorge 21 jusqu'à l'extrémité 25 de la languette 13. Les surfaces cylindriques 50 et 51 sont en regard l'une de l'autre, avec un léger jeu, dans la région de la longueur du joint comprise entre la gorge 21 et la cannelure 44, ce qui élimine tout risque de grippage lors du vissage.

Par exemple, pour un joint tubulaire de diamètre extérieur 193,7 mm (7,625 in), le profil de la cannelure 44 peut avoir un rayon de courbure de 6,31 mm, une largeur de 6,76 mm et une profondeur de l'ordre de quelques dixièmes de mm.

Lors du passage du boulet d'expansion, en raison de l'effort radial subi par la lèvre mâle, la partie de la surface cylindrique 51 qui se trouve en regard de la cannelure 44 se bombe pour pénétrer dans l'espace libre délimité par celle-ci. Il se forme ainsi sur la surface périphérique 7 un épaulement 52, conjugué de l'épaulement 41 défini par le flanc de la cannelure 44. De même que les épaulements 41 et 43 de la figure 17, les épaulements 41 et 52 de la figure 19 se déplacent axialement l'un par rapport à l'autre au cours de l'expansion, avec un serrage axial croissant conduisant à un contact étanche.

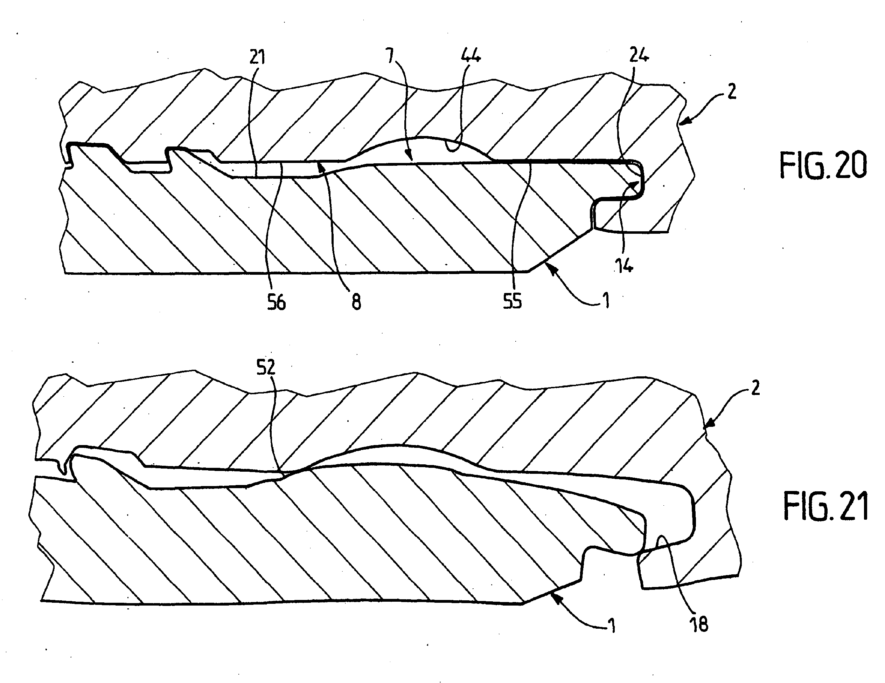

Dans le joint tubulaire initial représenté partiellement sur la figure 20, l'élément mâle 1 est identique à celui de la figure 18. En revanche, la cannelure 44 de l'élément femelle 2 est décalée axialement par rapport à celle de l'élément femelle de la figure 18. Ainsi, la surface périphérique 8 du logement comprend, de part et d'autre de la cannelure 44 et se raccordant à celle-ci, deux parties de surfaces cylindriques de même diamètre, à savoir une première partie 55 s'étendant jusqu'au fond 24 de la rainure 14, et une seconde partie 56 s'étendant à l'opposé de la rainure. La partie 55 est disposée avec un léger jeu en regard de la surface cylindrique de la lèvre mâle, et la partie 56 est située en regard de la gorge 21. Grâce à cette configuration, tout risque de grippage est éliminé lors du vissage.

Le profil de la cannelure est par exemple identique à celui décrit à propos de la figure 18, son centre de courbure étant à une distance du fond 24 de la rainure égale à 9,38 mm, de sorte que le bord de la cannelure opposé à la rainure se trouve en regard de la partie de surface cylindrique extérieure 51 de la lèvre mâle.

Au cours de l'expansion radiale, un épaulement 52 est formé sur l'épaulement mâle de la manière décrite à propos de la figure 19, cet épaulement coopérant avec l'épaulement 41 de la manière décrite.

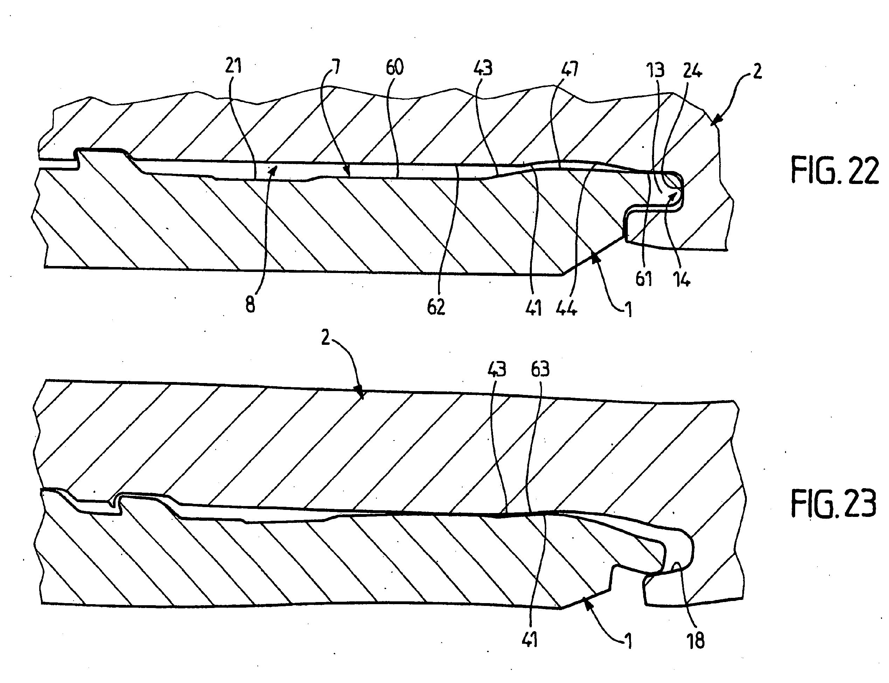

La lèvre mâle représentée sur la figure 22 présente un profil semblable à celui de la lèvre illustrée par la figure 16. Sa surface périphérique 7 tournée radialement vers l'extérieur comporte donc, à partir de l'extrémité 25 de la languette 13, une première partie de paroi cylindrique 47 raccordée par un épaulement incliné 43 à une seconde partie de paroi cylindrique 60 de plus petit diamètre, elle-même suivie par la gorge 21. Le profil du logement de l'élément femelle de la figure 22 est analogue à celui illustré par la figure 20, à ceci près que le diamètre de la partie de paroi cylindrique 61 comprise entre la cannelure 44 et le fond 24 de la rainure 14 est plus petit que celui de la partie de surface cylindrique 62 se raccordant à la cannelure, à l'opposé de la rainure 14. Le diamètre de la partie de surface 61 est aussi légèrement inférieur à celui de la partie de surface 47, produisant une interférence radiale de ces surfaces lors du vissage du joint.

En revanche, le diamètre de la partie de surface 62 est supérieur à celui de la partie de surface 47, ce qui élimine les risques de grippage de ces surfaces lors du vissage.

Par exemple, pour un joint tubulaire initial d'un diamètre extérieur de 152,4 mm (6 in) le profil de la cannelure 44 peut présenter un rayon de courbure de 10,4 mm, centré à 3,7 mm de la face d'extrémité 25 de la languette 13, et une largeur axiale de 4,9 mm, la profondeur maximale de la cannelure étant de 0,445 mm par rapport à la partie de surface 61 et de 0,19 mm par rapport à la partie de surface 62, la différence de diamètre entre ces deux parties de surface étant donc de 0,51 mm.

Au cours de l'expansion radiale, à côté de l'épaulement 43 pré-existant, un épaulement 63 se forme sur les zones 43 et 47 de la surface périphérique 7 de la lèvre mâle, comme décrit en liaison avec la figure 19, et coopère comme décrit avec l'épaulement 41.

La cannelure imprime à la lèvre mâle une courbure locale plus importante qui tend à favoriser le contact entre la languette 13 et le flanc 18 de la rainure 14. Ce contact permet de verrouiller et de stabiliser le comportement de la lèvre sous la pression, notamment intérieure, d'un fluide.

Dans les modes de réalisation des figures 16, 18, 20 et 22, la profondeur de la cannelure est avantageusement comprise entre 0,05 et 1 mm et de préférence inférieure à 0,5 mm, cette profondeur étant définie, lorsque la cannelure est comprise entre deux parties de paroi périphérique de diamètres différents, comme la hauteur radiale du plus haut de ses deux flancs.

Lors de la fabrication du joint tubulaire initial, on peut avantageusement appliquer, sur l'une et/ou l'autre des surfaces destinées à venir en contact mutuel étanche, une couche de matériau ductile telle que décrite dans la demande de brevet n° 0200053 du 3 janvier 2002. Cette couche ductile permet de combler les aspérités des métaux utilisés pour l'élément mâle 1 et pour l'élément femelle 2. La zone de contact après expansion est augmentée entre l'épaulement incliné de la lèvre et l'épaulement incliné du logement.

Comme connu en soi, pour éviter une dissymétrie dans la réalisation des filetages et par conséquent une diminution de la résistance mécanique des joints, due au fait que les diamètres respectivement extérieur et intérieur des tubes ne sont pas concentriques lorsqu'ils sortent de fabrication avant filetage, on peut réaliser avant l'opération de filetage une expansion du diamètre extérieur partant de l'extrémité libre de l'élément femelle et s'étendant sur tout ou partie de la longueur du filetage à réaliser.

De manière similaire, il est possible de réduire le diamètre intérieur au voisinage l'extrémité de l'élément mâle par un rétreint réalisé avant usinage.

L'expansion et le rétreint peuvent être réalisés avec un diamètre constant, ou avec un diamètre croissant pour l'élément femelle, décroissant pour l'élément mâle, en direction de l'extrémité.

## Revendications

1. Procédé de réalisation d'un joint tubulaire étanche de hautes performances dans lequel on part d'un joint tubulaire initial comprenant
- un premier élément tubulaire mâle (1), comportant un premier filetage mâle (3) et une lèvre annulaire (5) ayant une première surface de butée axiale (9) en extrémité libre du premier élément, et
- un second élément tubulaire femelle (2), comportant un second filetage femelle (4), homologue du premier filetage (3), et un logement (6), homologue de la lèvre mâle, ayant une seconde surface de butée axiale (10),
le premier filetage étant vissé dans le second filetage pour amener les deux surfaces de butée en contact mutuel,
et on fait subir au joint tubulaire initial une expansion diamétrale dans le domaine des déformations plastiques à l'aide d'un boulet d'expansion (30) de diamètre supérieur au diamètre intérieur (DI) desdits éléments tubulaires qui est déplacé axialement dans le joint, **caractérisé en ce que,** lors de ladite expansion radiale, un premier épaulement incliné (43) tourné axialement à l'opposé desdites surfaces de butée axiale et formé sur la surface périphérique de la lèvre mâle tournée radialement vers l'extérieur, et un premier épaulement incliné (41) tourné axialement vers lesdites surfaces de butée axiale et formé sur la surface périphérique du logement femelle tournée radialement vers l'intérieur, subissent un déplacement axial relatif l'un vers l'autre pour venir en contact mutuel étanche avec interférence radiale.

2. Procédé selon la revendication 1, dans lequel la surface périphérique (8) du logement tournée radialement vers l'intérieur comporte une cannelure annulaire (44) à profil en arc concave qui présente un premier flanc tourné axialement vers lesdites surfaces de butée axiale et un second flanc tourné axialement à l'opposé desdites surfaces de butée axiale, le premier épaulement incliné (41) du logement étant défini par ledit premier flanc.

3. Procédé selon la revendication 2, dans lequel le profil de la cannelure possède un rayon de courbure compris entre 5 et 30 mm, de préférence voisin de 10 mm.

4. Procédé selon l'une des revendications 2 et 3, dans lequel la hauteur radiale du plus haut desdits premier et second flans est comprise entre 0,05 et 1 mm et de préférence inférieure à 0,5 mm.

5. Procédé selon l'une des revendications 1 à 4, dans lequel les premiers épaulements inclinés de la lèvre et du logement sont présents sur le joint tubulaire initial.

6. Procédé selon la revendication 5, dans lequel les premiers épaulements inclinés présents sur le joint tubulaire initial sont axialement en vis-à-vis l'un de l'autre sur une partie au moins de leur hauteur radiale.

7. Procédé selon l'une des revendications 5 et 6, rattachée à la revendication 2, dans lequel la partie de la lèvre comprise entre son premier épaulement incliné (43) et sa surface de butée axiale (9) est au moins partiellement imprimée dans la surface de la cannelure lors de l'expansion.

8. Procédé selon l'une des revendications 5 à 7, rattachée à la revendication 2, dans lequel la cannelure (44) se raccorde du côté de la seconde surface de butée axiale (10) à une première partie de paroi périphérique (45) et du côté opposé à une seconde partie de paroi périphérique (40) de plus petit diamètre que la première partie de paroi périphérique.

9. Procédé selon la revendication 8, dans lequel la différence entre les diamètres desdites parties de paroi périphérique est inférieure ou égale à 1 mm.

10. Procédé selon la revendication 2, dans lequel le premier épaulement incliné de la lèvre est formé par impression au moins partielle de celle-ci dans la surface de la cannelure lors de l'expansion.

11. Procédé selon la revendication 10, dans lequel la cannelure est adjacente à la seconde surface de butée axiale.

12. Procédé selon la revendication 10, dans lequel la cannelure (44) se raccorde du côté de la seconde surface de butée axiale (10) à une première partie de paroi périphérique (55) et du côté opposé à une seconde partie de paroi périphérique (56) sensiblement de même diamètre que la première partie de paroi périphérique.

13. Procédé selon la revendication 10, dans lequel la cannelure (44) se raccorde du côté de la seconde surface de butée axiale (10) à une première partie de paroi périphérique (61) et du côté opposé à une seconde partie de paroi périphérique (62) de plus grand diamètre que la première partie de paroi périphérique.

14. Procédé selon la revendication 13, dans lequel la différence entre les diamètres desdites parties de paroi périphérique est inférieure ou égale à 1 mm.

15. Procédé selon l'une des revendications 13 et 14, dans lequel la première partie de paroi périphérique (61) du logement a un plus petit diamètre que la surface en vis-à-vis de la lèvre mâle de manière à produire une interférence radiale entre ces surfaces en fin de vissage.

16. Procédé selon l'une des revendications précédentes, dans lequel le premier épaulement incliné (43) de la lèvre mâle et/ou le premier épaulement incliné (41) du logement sont munis d'un revêtement d'un matériau plus ductile que le matériau du substrat.

17. Procédé selon l'une des revendications précédentes, dans lequel l'expansion radiale du joint est réalisée selon un taux d'expansion au moins égal à 10 %.

18. Procédé selon la revendication 17, dans lequel l'expansion radiale du joint est réalisée selon un taux d'expansion d'environ 15 %.

19. Procédé selon l'une des revendications précédentes, dans lequel la surface périphérique du logement tournée radialement vers l'intérieur comporte un second épaulement incliné (42) tourné axialement à l'opposé du premier épaulement incliné (41) et délimitant avec celui-ci une nervure annulaire (40).

20. Procédé selon la revendication 19, dans lequel les premier et second épaulements inclinés (41 et 42) du logement se raccordent au sommet de la nervure annulaire par des arrondis.

21. Procédé selon la revendication 20, dans lequel l'arrondi du second épaulement incliné (42) du logement a un rayon de courbure plus grand que le rayon de courbure de l'arrondi du premier épaulement incliné (41).

22. Procédé selon l'une des revendications précédentes, dans lequel l'épaulement incliné (43) de la lèvre mâle se raccorde par un arrondi convexe à la surface périphérique tournée radialement vers l'extérieur.

23. Procédé selon l'une des revendications précédentes, dans lequel lesdits épaulements présentent une inclinaison comprise entre 5 et 20 °, de préférence voisine de 10 °, par rapport à l'axe longitudinal du joint.

24. Procédé selon l'une des revendications précédentes, dans lequel lesdits épaulements présentent une hauteur radiale comprise entre 0,2 et 1 mm, de préférence voisine de 0,5 mm.

25. Procédé selon l'une des revendications précédentes, dans lequel le premier élément tubulaire et le second élément tubulaire appartiennent respectivement à un tube de grande longueur et à un manchon destiné à raccorder celui-ci à un autre tube de grande longueur par un second joint tubulaire obtenu également par le procédé selon l'une des revendications précédentes.

26. Procédé selon l'une des revendications précédentes, dans lequel la première surface de butée axiale est une surface saillante (9) constituée par une languette (13) annulaire et par une surface transversale (15) adjacente à la languette et en retrait axial par rapport à celle-ci et reliée à la surface périphérique intérieure du premier élément et en ce que la seconde surface de butée axiale est une surface de butée rentrante (10) constituée par une rainure (14) annulaire et par une surface transversale (16) adjacente à celle-ci reliée à la surface périphérique intérieure du second élément, la languette (13) coopérant avec la rainure (14).

27. Procédé selon l'une des revendications précédentes, dans lequel les premier (3) et second (4) filetages sont coniques de conicité au plus égale à 12,5 %.

28. Procédé selon l'une des revendications 1 à 26, dans lequel les premier (3) et second (4) filetages sont cylindriques.

29. Procédé selon l'une des revendications précédentes, dans lequel la lèvre (5) possède une épaisseur (eₗ) comprise entre 1/3 et 2/3 de l'épaisseur du premier élément tubulaire (1).

30. Procédé selon l'une des revendications précédentes, dans lequel la lèvre (5) possède une longueur (lₗ) et une épaisseur (eₗ) telles que le rapport longueur sur épaisseur de lèvre est compris entre 1 et 4.

31. Procédé selon l'une des revendications précédentes, dans lequel le premier élément tubulaire (1) présente une gorge (21), en extrémité du premier filetage (3), entre filetage et lèvre (5).

32. Procédé selon l'une des revendications précédentes, dans lequel la gorge (21) a une profondeur (h_{g}) au plus égale à la hauteur des filets du premier filetage (3).

33. Procédé selon l'une des revendications précédentes, dans lequel la gorge (21) a une longueur (l_{g}) et une profondeur (h_{g}) telles que sa longueur est comprise entre 2 et 15 fois sa profondeur.

34. Joint tubulaire initial utilisable pour la mise en oeuvre du procédé selon l'une des revendications précédentes, comprenant
- un premier élément tubulaire mâle (1), comportant un premier filetage mâle (3) et une lèvre annulaire (5) ayant une première surface de butée axiale (9) en extrémité libre du premier élément, et
- un second élément tubulaire femelle (2), comportant un second filetage femelle (4), homologue du premier filetage (3), et un logement (6), homologue de la lèvre mâle, ayant une seconde surface de butée axiale (10), le premier filetage étant propre à se visser dans le second filetage pour amener les deux surfaces de butée en contact mutuel, et la surface périphérique du logement tournée radialement vers l'intérieur comportant un premier épaulement incliné (41) tourné vers la seconde surface de butée axiale.

35. Joint tubulaire selon la revendication 34, qui est spécifié pour être expansé par le passage axial d'un boulet indifféremment dans un sens ou dans l'autre.

36. Joint tubulaire étanche de hautes performances tel qu'on peut l'obtenir par le procédé selon l'une des revendications 1 à 33, comprenant
- un premier élément tubulaire mâle (1), comportant un premier filetage mâle (3) et une lèvre annulaire (5) ayant une première surface de butée axiale (9, 15) en extrémité libre du premier élément, et
- un second élément tubulaire femelle (2), comportant un second filetage femelle (4), homologue du premier filetage (3), et un logement (6), homologue de la lèvre mâle, ayant une seconde surface de butée axiale,
le premier filetage étant vissé dans le second filetage, un premier épaulement incliné (43) tourné axialement à l'opposé desdites surfaces de butée axiale et formé sur la surface périphérique de la lèvre mâle tournée radialement vers l'extérieur, et un premier épaulement incliné (41) tourné axialement vers lesdites surfaces de butée axiale et formé sur la surface périphérique du logement femelle tournée radialement vers l'intérieur, étant en contact mutuel étanche avec interférence radiale.

37. Joint tubulaire étanche selon la revendication 36, tel qu'on peut l'obtenir par le procédé selon la revendication 26, dans lequel la languette (13) est en contact avec le flanc (18) de la rainure (14) adjacent à ladite surface transversale (16) de la seconde surface de butée axiale.

## Claims

1. Method for making a high performance sealed tubular joint starting from a first-state tubular joint consisting of
- a first male tubular element (1), comprising a first male threading (3) and a ring shaped lip (5) having a first axial stop limit surface (9) at the free end of the first element, and
- a second female tubular element (2), comprising a second female threading (4), matching the first threading (3), and a housing (6) matching the male lip, having a second axial stop limit surface (10),
the first threading being screwed into the second threading to bring the two stop surfaces into mutual contact,
and the first-state tubular joint is subjected to diametric expansion of the plastic distortion type using an expansion ball (30) of greater diameter than the internal diameter (DI) of said tubular elements which is axially displaced in the joint, **characterised by** the fact that, during the said radial expansion, a first inclined shoulder (43) axially facing in the opposite direction of said axial stop surfaces and formed on the peripheral surface of the male lip radially facing outwards, and a first inclined shoulder (41) axially facing towards the said axial stop surfaces and formed on the peripheral surface of the female housing radially facing inwards, undergo axial displacement in relation to each other to come into sealed mutual contact with radial interference.

2. Method according to claim 1, in which the peripheral surface (8) of the housing radially facing inwards comprises a ring shaped channel (44) with a concave arc profile which presents a first flank axially facing towards said axial stop surfaces and a second flank axially facing in the opposite direction to said axial stop surfaces, the first inclined shoulder (41) of the housing being defined by said first flank.

3. Method according to claim 2, in which the profile of the channel has a radius of curvature between 5 and 30 mm, preferably close to 10 mm.

4. Method according to one of the claims 2 and 3, in which the greatest radial height of said first and second flanks is between 0.05 and 1 mm and preferably less than 0.5 mm.

5. Method according to one of claims 1 to 4, in which the first inclined shoulders of the lip and the housing are present on the first tubular joint.

6. Method according to claim 5, in which the first inclined shoulders present on the first tubular joint are axially facing each other over at least one part of their radial height.

7. Method according to one of claims 5 and 6, associated with claim 2, in which the part of the lip between its first inclined shoulder (43) and its axial stop surface (9) is at least partially impressed in the surface of the channel during expansion.

8. Method according to one of claims 5 to 7, associated with claim 2, in which the channel (44) is connected on the side of the second axial stop surface (10) to a first part of peripheral wall (45) and on the opposite side to a second part of peripheral wall (40) smaller in diameter than the first part of peripheral wall.

9. Method according to claim 8, in which the difference between the diameters of said parts of peripheral wall is no greater than 1 mm.

10. Method according to claim 2, in which the first inclined shoulder of the lip is formed by at least martial impression of it into the surface of the channel during expansion.

11. Method according to claim 10, in which the channel is adjacent to the second axial stop surface.

12. Method according to claim 10, in which the channel (44) is connected on the side of the second axial stop surface (10) to a first part of peripheral wall (55) and on the opposite side to a second part of peripheral wall (56) substantially of the same diameter as the first part of peripheral wall.

13. Method according to claim 10, in which the channel (44) is connected on the side of the second axial stop surface (10) to a first part of peripheral wall (61) and on the opposite side to a second part of peripheral wall (62) of greater diameter than the first part of peripheral wall.

14. Method according to claim 13, in which the difference between the diameters of said parts of peripheral wall is no greater than 1 mm.

15. Method according to one of claims 13 and 14, in which the first part of peripheral wall (61) of the housing has a smaller diameter than the surface opposite the male lip so that radial interference occurs between these surfaces when screwing is competed.

16. Method according to one of the previous claims, in which the first inclined shoulder (43) of the male lip and/or the first inclined shoulder (41) of the housing are coated with a material which is more ductile than the material of the substrate.

17. Method according to one of the previous claims, in which the radial expansion of the joint is produced according to an expansion rate of at least 10%.

18. Method according to claim 17, in which the radial expansion of the joint is produced according to an expansion rate of about 15%.

19. Method according to one of the previous claims, in which the peripheral surface of the housing radially facing inwards comprises a second inclined shoulder (42) axially facing in the opposite direction to the first inclined shoulder (41) and together with it delimiting a ring shaped rib (40).

20. Method according to claim 19, in which the first and second inclined shoulders (41 and 42) of the housing are connected to the top of the ring shaped rib by roundings.

21. Method according to claim 20, in which the rounding of the second inclined shoulder (42) of the housing has a radius of curvature which is greater than the radius of curvature of the rounding of the first inclined shoulder (41).

22. Method according to one of the previous claims, in which the inclined shoulder (43) of the male lip is connected by a convex rounding to the peripheral surface radially facing outwards.

23. Method according to one of the previous claims, in which the said shoulders present an angle of inclination between 5 and 20°, preferably close to 10°, in relation to the longitudinal axis of the joint

24. Method according to one of the previous claims, in which the said shoulders present a radial height which is between 0.2 and 1 mm, preferably close to 0.5 mm.

25. Method according to one of the previous claims, in which the first tubular element and the second tubular element respectively belong to a great-length tube and a sleeve intended to connect it to another great-length tube by means of a second tubular joint also obtained by the method according to one of the previous claims.

26. Method according to one of the previous claims, in which the first axial stop surface is a projecting surface (9) formed by a ring shaped tongue (13) and a transverse surface (15) adjacent to the tongue and axially standing back in relation to it and linked to the internal peripheral surface of the first element and in which the second axial stop surface is a recessed stop surface (10) formed by a ring shaped groove (14) and a transverse surface (16) adjacent to it, linked to the internal peripheral surface of the second element, the tongue (13) cooperating with the groove (14).

27. Method according to one of the previous claims, in which the first (3) and second (4) threadings are conical, their conicity being no greater than 12.5%.

28. Method according to one of claims 1 to 26, in which the first (3) and second (4) threadings are cylindrical.

29. Method according to one of the previous claims, in which the thickness (e₁) of the lip (5) is between 1/3 and 2/3 of the thickness of the first tubular element (1).

30. Method according to one of the previous claims, in which the length (l₁) and the thickness (e₁) of the lip (5) are such that the ratio of length to thickness of the lip is between 1 and 4.

31. Method according to one of the previous claims, in which the first tubular element (1) has a grove (21) at the end of the first threading (3), between the threading and the lip (5).

32. Method according to one of the previous claims, in which the depth (h_{g}) of the throat (21) is no greater than the height of the threads in the first threading (3).

33. Method according to one of the previous claims, in which the length (l_{g}) and depth (h_{g}) of the groove (21) are such that its length is between 2 and 15 times its depth.

34. First-state tubular joint usable for implementation of the method according to one of the previous claims consisting of
- a first tubular male element (1), comprising a first male threading (3) and a ring shaped lip (5) having a first axial stop surface (9) at the free end of the first element, and
- a second tubular female element (2) comprising a second female threading (4), matching the first threading (3), and a housing (6) matching the male lip, having a second axial stop surface (10),
the first threading being able to be screwed into the second threading to bring the two stop surfaces into mutual contact; and the peripheral surface of the housing radially facing inwards comprising a first inclined shoulder (41) facing towards the second axial stop surface.

35. Tubular joint according to claim 34, which is specified to be expanded by axial passage of an expansion ball in either one direction or the other.

36. High performance sealed tubular joint as can be obtained by means of the method according to one of the claims 1 to 33, consisting of
- a first tubular male element (1), comprising a first male threading (3) and a ring shaped lip (5) having a first axial stop surface (9, 15) at the free end of the first element, and
- a second tubular female element (2), comprising a second female threading (4), matching the first threading (3), and a housing (6) matching the male lip, having a second axial stop surface,
the first threading being screwed into the second threading, a first inclined shoulder (43) axially facing in the opposite direction to said axial stop surfaces and formed, on the peripheral surface of the male lip radially facing outwards, and a first inclined shoulder (41) axially facing towards said axial stop surfaces and formed on the peripheral surface of the female housing radially facing inwards, being in sealed mutual contact with radial interference.

37. Sealed tubular joint according to claim 36, such as may be obtained by the method according to claim 26, in which the tongue (13) is in contact with the flank (18) of the groove (14) adjacent to said transverse surface (16) of the second axial stop surface.

## Patentansprüche

1. Verfahren zur Herstellung einer dichten Hochleistungs-Rohrverbindung, bei dem von einer Ausgangsrohrverbindung ausgegangen wird, die aufweist
- ein erstes Einsteck-Rohrelement (1), das ein erstes Außengewinde (3) und eine Ringlippe (5) aufweist, die eine erste axiale Anschlagfläche (9) am freien Ende des ersten Elements hat, und
- ein zweites Aufnahme-Rohrelement (2), das ein zweites Innengewinde (4) entsprechend dem ersten Gewinde (3) und einen Sitz (6) entsprechend der Einstecklippe aufweist, der eine zweite axiale Anschlagfläche (10) hat,
wobei das erste Gewinde in das zweite Gewinde geschraubt wird, um die zwei Anschlagflächen in gegenseitigen Kontakt zu bringen,
und wobei die Ausgangsrohrverbindung eine diametrale Aufweitung im Bereich der plastischen Verformungen mit Hilfe einer Expansionskugel (30) eines größeren Durchmessers als der Innendurchmesser (DI) der Rohrelemente erfährt, die axial in der Verbindung verschoben wird, **dadurch gekennzeichnet, dass** bei der radialen Aufweitung eine erste geneigte Schulter (43), die axial in Gegenrichtung zu den axialen Anschlagflächen weist und auf der radial nach außen weisenden Umfangsfläche der Einstecklippe geformt ist, und eine erste geneigte Schulter (41), die axial zu den axialen Anschlagflächen weist und auf der radial nach innen weisenden Umfangsfläche des Aufnahmesitzes geformt ist, eine axiale Verschiebung zueinander erfahren, um mit radialer Interferenz in gegenseitigen dichten Kontakt zu kommen.

2. Verfahren nach Anspruch 1, bei dem die radial nach innen weisende Umfangsfläche (8) des Sitzes eine ringförmige Rille (44) mit konkavem Bogenprofil aufweist, die eine axial zu den axialen Anschlagflächen weisende erste Flanke und eine axial entgegengesetzt zu den axialen Anschlagflächen weisende zweite Flanke aufweist, wobei die erste geneigte Schulter (41) des Sitzes von der ersten Flanke definiert wird.

3. Verfahren nach Anspruch 2, bei dem das Profil der Rille einen Krümmungsradius zwischen 5 und 30 mm, vorzugsweise nahe 10 mm besitzt.

4. Verfahren nach einem der Ansprüche 2 und 3, bei dem die radiale Höhe der höheren der ersten und zweiten Flanke zwischen 0,05 und 1 mm und vorzugsweise unter 0,5 mm liegt.

5. Verfahren nach einem der Ansprüche 1 bis 4, bei dem die ersten geneigten Schultern der Lippe und des Sitzes auf der Ausgangsrohrverbindung vorhanden sind.

6. Verfahren nach Anspruch 5, bei dem die auf der Ausgangsrohrverbindung vorhandenen ersten geneigten Schultern einander über zumindest einen Teil ihrer radialen Höhe axial gegenüber liegen.

7. Verfahren nach einem der Ansprüche 5 und 6 in Verbindung mit Anspruch 2, bei dem der Teil der Lippe, der zwischen ihrer ersten geneigten Schulter (43) und ihrer axialen Anschlagfläche (9) liegt, bei der Aufweitung zumindest zum Teil in die Fläche der Rille eingedrückt wird.

8. Verfahren nach einem der Ansprüche 5 bis 7 in Verbindung mit Anspruch 2, bei dem die Rille (44) auf der Seite der zweiten axialen Anschlagfläche (10) mit einem ersten Umfangswandbereich (45) und auf der entgegengesetzten Seite mit einem zweiten Umfangswandbereich (40) kleineren Durchmessers als der erste Umfangswandbereich verbunden ist.

9. Verfahren nach Anspruch 8, bei dem der Unterschied zwischen den Durchmessern der Umfangswandbereiche kleiner als oder gleich 1 mm ist.

10. Verfahren nach Anspruch 2, bei dem die erste geneigte Schulter der Lippe durch deren mindestens teilweises Eindrücken in die Fläche der Rille bei der Aufweitung geformt wird.

11. Verfahren nach Anspruch 10, bei dem die Rille der zweiten axialen Anschlagfläche benachbart ist.

12. Verfahren nach Anspruch 10, bei dem die Rille (44) auf der Seite der zweiten axialen Anschlagfläche (10) mit einem ersten Umfangswandbereich (55) und auf der entgegengesetzten Seite mit einem zweiten Umfangswandbereich (56) mit im Wesentlichen gleichem Durchmesser wie der erste Umfangswandbereich verbunden ist.

13. Verfahren nach Anspruch 10, bei dem die Rille (44) auf der Seite der zweiten axialen Anschlagfläche (10) mit einem ersten Umfangswandbereich (61) und auf der entgegengesetzten Seite mit einem zweiten Umfangswandbereich (62) mit größerem Durchmesser als der erste Umfangswandbereich verbunden ist.

14. Verfahren nach Anspruch 13, bei dem der Unterschied zwischen den Durchmessern der Umfangswandbereiche kleiner als oder gleich 1 mm ist.

15. Verfahren nach einem der Ansprüche 13 und 14, bei dem der erste Umfangswandbereich (61) des Sitzes einen kleineren Durchmesser hat als die gegenüberliegende Fläche der Einstecklippe, um am Ende des Schraubvorgangs eine radiale Interferenz zwischen diesen Flächen zu erzeugen.

16. Verfahren nach einem der vorhergehenden Ansprüche, bei dem die erste geneigte Schulter (43) der Einstecklippe und/oder die erste geneigte Schulter (41) des Sitzes mit einer Beschichtung aus einem duktileren Werkstoff als der Werkstoff des Substrats versehen sind.

17. Verfahren nach einem der vorhergehenden Ansprüche, bei dem die radiale Aufweitung der Verbindung gemäß einem Aufweitungsgrad mindestens gleich 10 % durchgeführt wird.

18. Verfahren nach Anspruch 17, bei dem die radiale Aufweitung der Verbindung gemäß einem Aufweitungsgrad von etwa 15 % durchgeführt wird.

19. Verfahren nach einem der vorhergehenden Ansprüche, bei dem die radial nach innen weisende Umfangsfläche des Sitzes eine zweite geneigte Schulter (42) aufweist, die axial entgegengesetzt zur ersten geneigten Schulter (41) weist und mit dieser eine Ringrippe (40) begrenzt.

20. Verfahren nach Anspruch 19, bei dem die erste und die zweite geneigte Schulter (41 und 42) des Sitzes sich am Scheitel der Ringrippe durch Abrundungen verbinden.

21. Verfahren nach Anspruch 20, bei dem die Abrundung der zweiten geneigten Schulter (42) des Sitzes einen größeren Krümmungsradius als der Krümmungsradius der Abrundung der ersten geneigten Schulter (41) hat.

22. Verfahren nach einem der vorhergehenden Ansprüche, bei dem die geneigte Schulter (43) der Einstecklippe sich über eine konvexe Abrundung mit der radial nach außen weisende Umfangsfläche verbindet.

23. Verfahren nach einem der vorhergehenden Ansprüche, bei dem die Schultern eine Neigung zwischen 5 und 20°, vorzugsweise nahe 10°, bezüglich der Längsachse der Verbindung haben.

24. Verfahren nach einem der vorhergehenden Ansprüche, bei dem die Schultern eine radiale Höhe zwischen 0,2 und 1 mm, vorzugsweise nahe 0,5 mm, haben.

25. Verfahren nach einem der vorhergehenden Ansprüche, bei dem das erste Rohrelement und das zweite Rohrelement zu einem Rohr großer Länge bzw. zu einer Muffe gehören, die dazu bestimmt ist, dieses mit einem anderen Rohr großer Länge über eine zweite Rohrverbindung zu verbinden, die ebenfalls durch das Verfahren nach einem der vorhergehenden Ansprüche erhalten wird.

26. Verfahren nach einem der vorhergehenden Ansprüche, bei dem die erste axiale Anschlagfläche eine vorstehende Fläche (9) ist, die aus einer ringförmigen Zunge (13) und aus einer Querfläche (15) besteht, die der Zunge benachbart ist und bezüglich dieser axial zurückgesetzt und mit der inneren Umfangsfläche des ersten Elements verbunden ist, und bei dem die zweite axiale Anschlagfläche eine einspringende Anschlagfläche (10) ist, die von einer Ringnut (14) und von einer Querfläche (16) gebildet wird, die dieser benachbart und mit der inneren Umfangsfläche des zweiten Elements verbunden ist, wobei die Zunge (13) mit der Nut (14) zusammenwirkt.

27. Verfahren nach einem der vorhergehenden Ansprüche, bei dem das erste (3) und das zweite (4) Gewinde kegelig mit einer Kegelneigung höchstens gleich 12,5 % sind.

28. Verfahren nach einem der Ansprüche 1 bis 26, bei dem das erste (3) und das zweite (4) Gewinde zylindrisch sind.

29. Verfahren nach einem der vorhergehenden Ansprüche, bei dem die Lippe (5) eine Dicke (e₁) aufweist, die zwischen 1/3 und 2/3 der Dicke des ersten Rohrelements (1) liegt.

30. Verfahren nach einem der vorhergehenden Ansprüche, bei dem die Lippe (5) eine derartige Länge (l₁) und einen derartige Dicke (e₁) aufweist, dass das Länge-Dicke-Verhältnis der Lippe zwischen 1 und 4 liegt.

31. Verfahren nach einem der vorhergehenden Ansprüche, bei dem das erste Rohrelement (1) eine Kehle (21) am Ende des ersten Gewindes (3) zwischen dem Gewinde und der Lippe (5) aufweist.

32. Verfahren nach einem der vorhergehenden Ansprüche, bei dem die Kehle (21) eine Tiefe (hg) höchstens gleich der Höhe der Gewindegänge des ersten Gewindes (3) hat.

33. Verfahren nach einem der vorhergehenden Ansprüche, bei dem die Kehle (21) eine derartige Länge (l_{g}) und Tiefe (hg) hat, dass ihre Länge zwischen 2 und 15 mal so groß ist wie ihre Tiefe.

34. Ausgangsrohrverbindung, die für die Durchführung des Verfahrens nach einem der vorhergehenden Ansprüche verwendbar ist, die aufweist
- ein erstes Einsteck-Rohrelement (1), das ein erstes Außengewinde (3) und eine Ringlippe (5) aufweist, die eine erste axiale Anschlagfläche (9) am freien Ende des ersten Elements hat, und
- ein zweites Aufnahme-Rohrelement (2), das ein zweites Innengewinde (4) entsprechend dem ersten Gewinde (3) und einen Sitz (6) entsprechend der Einstecklippe aufweist, der eine zweite axiale Anschlagfläche (10) hat,
wobei das erste Gewinde in das zweite Gewinde geschraubt werden kann, um die zwei Anschlagflächen in gegenseitigen Kontakt zu bringen, und die radial nach innen weisende Umfangsfläche des Sitzes eine erste geneigte Schulter (41) aufweist, die zur zweiten axialen Anschlagfläche weist.

35. Rohrverbindung nach Anspruch 34, die dazu bestimmt ist, durch den axialen Durchgang einer Kugel unterschiedslos in der einen oder der anderen Richtung ausgeweitet zu werden.

36. Dichte Hochleistungs-Rohrverbindung, wie sie durch das Verfahren nach einem der Ansprüche 1 bis 33 erhalten werden kann, die aufweist
- ein erstes Einsteck-Rohrelement (1), das ein erstes Außengewinde (3) und eine Ringlippe (5) aufweist, die eine erste axiale Anschlagfläche (9, 15) am freien Ende des ersten Elements hat, und
- ein zweites Aufnahme-Rohrelement (2), das ein zweites Innengewinde (4) entsprechend dem ersten Gewinde (3) und einen Sitz (6) entsprechend der Einstecklippe aufweist, der eine zweite axiale Anschlagfläche hat,
wobei das erste Gewinde in das zweite Gewinde geschraubt wird, wobei eine erste geneigte Schulter (43), die axial entgegengesetzt zu den axialen Anschlagflächen weist und auf der radial nach außen weisenden Umfangsfläche der Einstecklippe geformt ist, und eine erste geneigte Schulter (41), die axial zu den axialen Anschlagflächen weist und auf der radial nach innen weisenden Umfangsfläche des Aufnahmesitzes geformt ist, in gegenseitigem dichtem Kontakt mit radialer Interferenz sind.

37. Dichte Rohrverbindung nach Anspruch 36, wie sie durch das Verfahren gemäß Anspruch 26 erhalten werden kann, bei der die Zunge (13) mit der Flanke (18) der Nut (14) in Kontakt ist, die der Querfläche (16) der zweiten axialen Anschlagfläche benachbart ist.
